Europäisches Patentamt

European Patent Office

Office européen des brevets

(11) Numéro de publication : **0 162 732**
**B1**

# (12) FASCICULE DE BREVET EUROPÉEN

(45) Date de publication du fascicule du brevet :
07.09.88

(51) Int. Cl.⁴ : **H 04 N   5/38**

(21) Numéro de dépôt : 85400516.2

(22) Date de dépôt : 18.03.85

(54) **Dispositif séparateur pour extraire le son du signal de sortie d'un émetteur de télévision.**

(30) Priorité : 23.03.84 FR 8404550

(43) Date de publication de la demande :
27.11.85 Bulletin 85/48

(45) Mention de la délivrance du brevet :
07.09.88 Bulletin 88/36

(84) Etats contractants désignés :
AT BE CH DE GB IT LI LU NL SE

(56) Documents cités :
EP-A- 0 081 413
US-A- 4 009 334

(73) Titulaire : THOMSON-CSF
173, Boulevard Haussmann
F-75379 Paris Cédex 08 (FR)

(72) Inventeur : Michel, Jean
THOMSON-CSF SCPI 173, bld Haussmann
F-75379 Paris Cedex 08 (FR)

(74) Mandataire : Courtellemont, Alain et al
THOMSON-CSF SCPI 19, avenue de Messine
F-75008 Paris (FR)

EP 0 162 732 B1

Jouve, 18, rue St-Denis, 75001 Paris, France

## Description

La présente invention se rapporte à un dispositif séparateur destiné à extraire le signal son du signal de sortie d'un émetteur de télévision.

Dans un émetteur de télévision il est nécessaire d'extraire, du signal HF de sortie, une fraction du seul signal son. Cela est destiné, par exemple, à permettre un affichage de la valeur de la puissance son sur la sortie de l'émetteur, ou à permettre de fournir une tension de contre-réaction ou, dans le cas de plusieurs émetteurs couplés, à donner au système de couplage une information HF son.

Pour extraire, du signal HF de sortie d'un émetteur, une fraction du signal son, il est connu de prélever une partie de ce signal HF de sortie et de filtrer le signal ainsi prélevé de manière à ne conserver que la porteuse son et sa bande de modulation. Cette façon de procéder qui semble, à première vue, très simple, présente de gros inconvénients car, dans le signal prélevé, les fréquences image sont très proches des fréquences son ; il est donc difficile et coûteux d'effectuer un bon filtrage qui ne détériore pas le signal son tout en éliminant complètement le signal image.

La présente invention a pour but de faciliter l'extraction du signal son d'un signal de sortie d'émetteur de télévision.

Ceci est obtenu en soustrayant, du spectre total image plus son, le spectre image seul, obtenu par un trajet différent mais similaire du trajet du spectre total.

Selon l'invention un dispositif séparateur, pour extraire le son du signal de sortie d'un émetteur de télévision, comportant des moyens de prélèvement pour prélever un signal à tester sur la sortie de l'émetteur, est caractérisé en ce qu'il comporte un circuit de soustraction pour recevoir sur une première entrée, le signal à tester, et des moyens de conversion, couplés à une borne délivrant le signal à fréquence intermédiaire image, pour élaborer un signal image seule tel que, appliqué sur une seconde entrée du circuit de soustraction, la soustraction donne un signal correspondant au signal à tester débarrassé d'au moins la partie du spectre image la plus proche du spectre son, et en ce que les moyens de conversion comportent à cet effet : un convertisseur couplé pour recevoir, comme signal de transposition, le signal de transposition haute fréquence de l'émetteur et, comme signal à transposer, au moins la partie du spectre du signal à fréquence intermédiaire image la plus proche du signal à fréquence intermédiaire son, et des circuits de réglage pour régler le temps de transit, l'amplitude et la phase du signal image seule.

La présente invention sera mieux comprise et d'autres caractéristiques apparaîtront à l'aide de la description ci-après et des figures s'y rapportant qui représentent :

— la figure 1, un schéma partiel d'un émetteur de télévision comportant un dispositif séparateur selon l'art connu,

— la figure 2, un schéma partiel d'un émetteur de télévision comportant un dispositif séparateur selon l'invention.

— la figure 3, des graphiques se rapportant à des spectres de fréquence de signaux obtenus avec les dispositifs des figures 1 et 2.

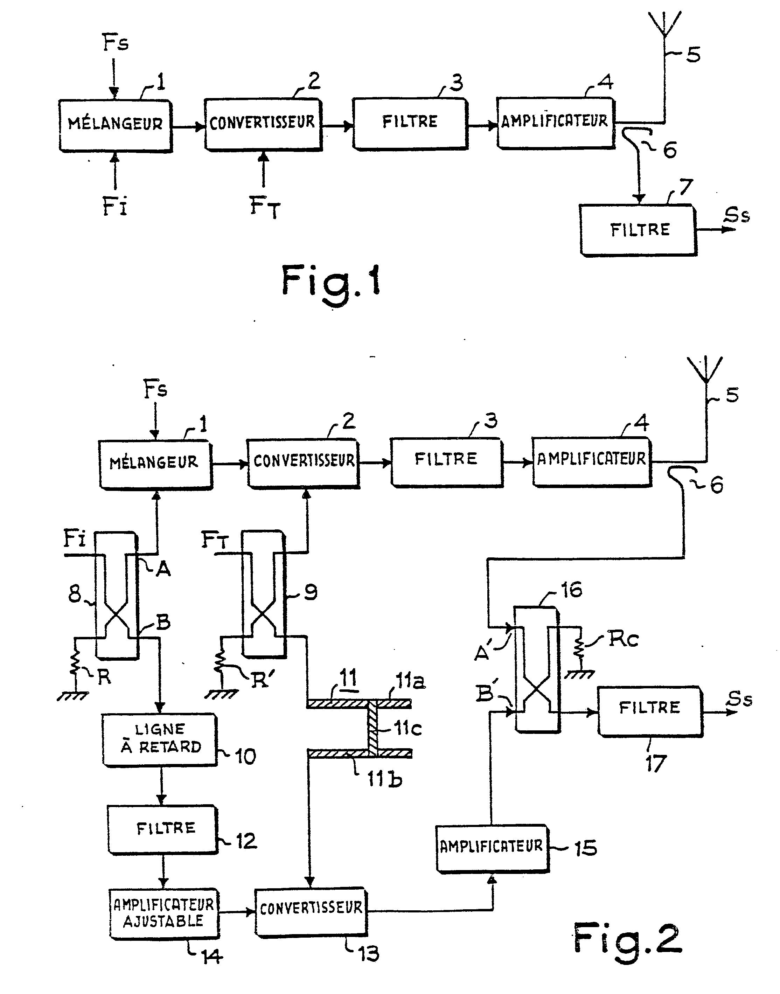

Sur les figures 1 et 2 les éléments correspondants sont désignés par les mêmes repères.

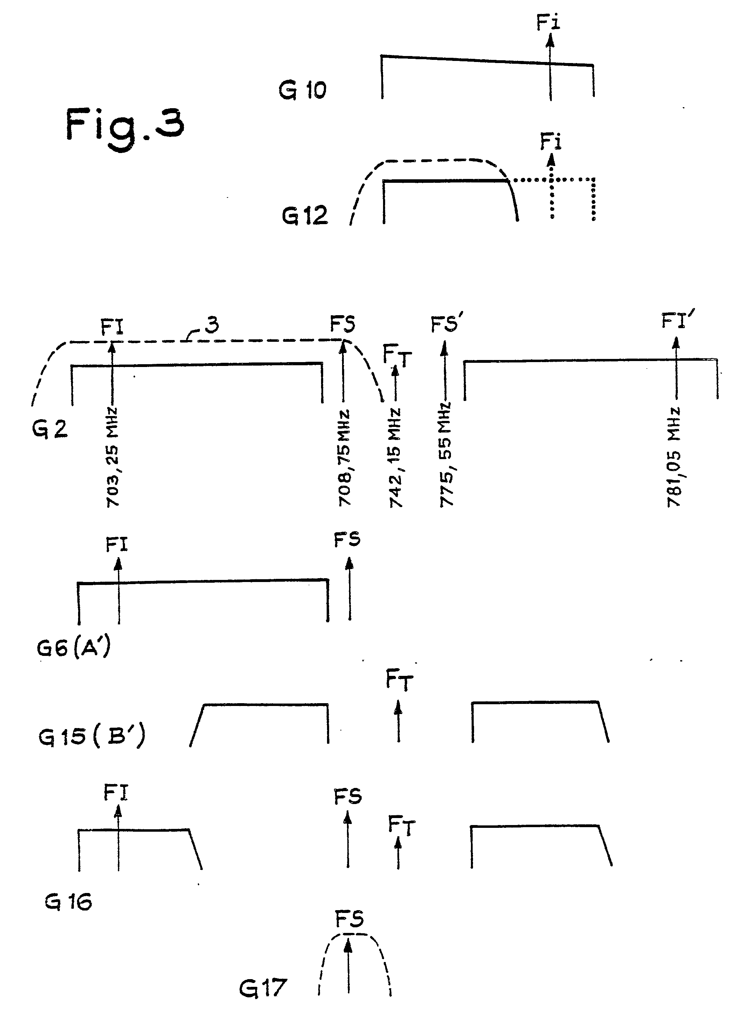

La figure 1 représente une partie d'un émetteur de télévision raccordé à une antenne d'émission 5. Cet émetteur comporte un mélangeur de fréquences, 1, qui reçoit les signaux son et image à fréquences intermédiaires, respectivement sur ses deux entrées. La sortie du mélangeur 1 est reliée à l'entrée d'un convertisseur de fréquences 2 qui réalise une transposition de fréquence des signaux de sortie du mélangeur 1 à l'aide d'un signal de transposition de fréquence $F_T$. La figure 3 montre, par un graphique G2, l'aspect du spectre du signal de sortie du convertisseur 2, avec les valeurs qu'ont, dans l'exemple décrit, la fréquence de transposition, $F_T$= 742,15 MHz, les fréquences image transposées, $FI$= 703,25 MHz et $FI'$= 781,05 MHz, les fréquences son transposées, $FS$= 708,75 MHz et $FS'$= 775,55 MHz et les bandes passantes image, situées d'environ -1 à +5 MHz autour de FI et de -6 à +1 MHz autour de FI'. Il est à noter que, par souci de simplification et de clarté du dessin, sur le graphique G2 de la figure 3, comme d'ailleurs sur les graphiques G6, G16 et G17, le signal son est représenté par une porteuse sans que soit indiquée l'excursion de fréquence due à la modulation de cette porteuse ; avec le même souci de simplification et de clarté du dessin, sur les graphiques G2 et G16 de la figure 3, les distances entre la fréquence de transposition et les fréquences porteuses image et son ont été réduites par rapport à ce qu'elles auraient dû être pour rester à la même échelle que l'écart entre les fréquences porteuses image et son d'une même bande latérale.

Un filtre passe-bande, 3, reçoit le signal de sortie du convertisseur 2 de la figure 1 et délivre, sur sa sortie, les signaux image et son de la bande latérale inférieure ; la bande passante du filtre 3 de la figure 1 a été représentée en traits interrompus sur le graphique G2.

La figure 1 montre également un amplificateur 4 qui amplifie le signal de sortie du filtre 3 pour l'appliquer à l'antenne 5. Une sonde HF, 6, capte une faible partie de l'énergie délivrée par l'amplificateur 4 sur son conducteur de sortie ; le signal ainsi capté est appliqué à l'entrée d'un filtre passe-bande, 7, dont le rôle est d'extraire les signaux relatifs au son, sans les déformer et sans laisser passer de signaux relatifs à l'image : signal Ss. Comme cela a été signalé plus avant, la réalisation du filtre 7 est difficile et coûteuse du fait de la proximité des signaux son et image.

La figure 2 montre comment le montage selon la figure 1 peut être modifié afin de faciliter l'extraction du son du signal de sortie de l'amplificateur 4.

Le montage selon la figure 2 comporte les mêmes éléments 1 à 6 que le montage selon la figure 1, avec les mêmes caractéristiques et des branchements identiques ; les signaux à la sortie des éléments 1 à 6 sont les mêmes que dans le cas de la figure 1.

Le mélangeur 1 de la figure 2 reçoit le signal à fréquence intermédiaire image, Fi, d'un distributeur de fréquences, 8, dont le rôle est un rôle d'adaptation d'impédance entre une entrée recevant le signal à fréquence intermédiaire image et deux sorties, A, B, délivrant ce même signal ; le distributeur 8 est constitué par un coupleur à 3dB à 90° dont les deux accès de la première paire d'accès conjugués constituent respectivement l'entrée du distributeur et la borne de branchement de la première extrémité d'une résistance d'équilibrage, R, dont la seconde extrémité est reliée à la terre ; la seconde paire d'accès conjugués du coupleur directif constitue les deux sorties, A, B, du distributeur 8 ; ces deux sorties fournissent le signal à fréquence intermédiaire image respectivement au mélangeur 1 et à une ligne à retard 10.

Le convertisseur 2 de la figure 2 reçoit le signal de transposition, à la fréquence $F_T$, d'un distributeur de fréquences, 9, dont le rôle est un rôle d'adaptation d'impédance entre une entrée recevant le signal à fréquence $F_T$ et deux sorties délivrant ce même signal ; le distributeur 9 est, comme le distributeur 8, constitué par un coupleur à 3 dB à 90° dont les deux accès de la première paire d'accès conjugués constituent respectivement l'entrée du distributeur 9 et la borne de branchement de la première extrémité d'une résistance d'équilibrage, R', dont la seconde extrémité est reliée à la terre ; la seconde paire d'accès conjugués de ce coupleur constitue les deux sorties du distributeur 9 ; ces deux sorties fournissent le signal de transposition respectivement au convertisseur 2 et à un circuit déphaseur réglable 11.

La ligne à retard, 10, est une ligne à retard ajustable, constituée par un câble coaxial d'une soixantaine de mètres, bobiné sur un support. Le graphique G10 de la figure 3 montre schématiquement l'aspect du spectre du signal qui est fourni par la ligne à retard 10. Ce signal est filtré par un filtre passe-bande 12 qui a deux rôles : compenser par une atténuation de +10 dB par octave, l'atténuation de —10 dB par octave entraînée par la ligne à retard 10 et éliminer les fréquences basses du spectre modulant en ne laissant passer que les fréquences basses du signal d'image à fréquence intermédiaire ; dans le graphique G12 une ligne en traits interrompus montre la bande passante du filtre 12 tandis que la partie du signal image à fréquence intermédiaire qui comporte la raie à la fréquence porteuse et qui est éliminée par le filtre 12, est représentée en pointillés.

Le signal de sortie du filtre 12 est amplifié par un amplificateur 14 à gain ajustable dont le signal de sortie est appliqué à l'entrée de modulation d'un convertisseur de fréquences 13, identique au convertisseur 2, qui reçoit comme signal de transposition le signal de sortie du circuit déphaseur réglable 11 ; ce circuit déphaseur réglable est réalisé en guide d'ondes à ruban (microstrip dans la littérature anglo-saxonne) et compte d'une part deux rubans parallèles, 11a, 11b, dont deux extrémités en regard constituent les deux accès du circuit déphaseur reliés respectivement au distributeur 9 et au convertisseur 13, et d'autre part un court-circuit, 11c, reliant les rubans 11a et 11b et dont la position des contacts sur les rubans 11a et 11b est réglable.

La sortie du convertisseur 13 est reliée à l'entrée d'un amplificateur 15 qui fournit le signal dont le diagramme, G15, est donné sur la figure 3 ; ce diagramme montre que le signal comporte une raie à la fréquence $F_T$ (avec $F_T = 742,15$ MHz dans l'exemple décrit) et deux bandes latérales correspondant aux fréquences hautes du spectre vidéo, qui ont traversé le filtre 12. Le signal de sortie de l'amplificateur 15 est appliqué à l'un des accès, B', de la première paire d'accès conjugués d'un coupleur à 3 dB à 90°, 16 ; l'autre accès conjugué, A', de la première paire d'accès conjugués du coupleur 16, reçoit le signal capté par la sonde HF, 6.

Le montage de la figure 2 qui vient d'être décrit jusqu'à, et y compris, le coupleur 16, est réglé pour que, dans la bande latérale inférieure du signal de sortie de l'amplificateur 15, il y ait :
— égalité des niveaux des signaux appliqués aux accès A' et B' du coupleur 16 ; ceci est obtenu par réglage à l'aide de l'amplificateur ajustable 14,
— égalité des temps de transit entre A et A' et entre B et B' ; ceci est obtenu par réglage de la longueur de la ligne à retard 10,
— déphasage de $\pi/2$ entre les signaux appliqués aux accès A' et B' du coupleur 16 ; ceci est obtenu par réglage de la position du court-circuit 11c du circuit déphaseur réglable 11,
avec de tels signaux sur ses entrées le coupleur 16 délivre sur l'une de ses sorties, reliée à un filtre 17, un signal de différence, dont le spectre est représenté sur la figure 3 par le graphique G16. Le graphique G16 correspond à une soustraction entre les spectres représentés sur les graphiques G6 et G15 ; c'est-à-dire que le spectre du graphique G16 est le spectre du graphique G6 débarrassé des fréquences image proches des fréquences son et auquel est ajouté une raie à la fréquence de transposition $F_T$ et une bande latérale correspondant à la bande latérale supérieure du spectre du graphique G15. Sur l'autre sortie du coupleur 16 est branchée une résistance de charge, Rc, dont le rôle est de dissiper l'énergie des signaux qui lui sont appliqués par le coupleur 16.

Du fait de la soustraction effectuée par le coupleur 16 et dont le résultat donne le signal d'entrée du filtre 17, ce filtre n'est gêné, pour extraire les fréquences son, ni du côté des fréquences basses puisque les fréquences images les plus proches (voir graphique G6, par exemple, en comparaison avec le graphique G16) ont été éliminées par le filtre 12, ni du côté des fréquences hautes puisque le signal le plus proche est le signal à la fréquence de transposition $F_T$ qui se trouve à une quarantaine de mégahertz des fréquences son. La réalisation du filtre 17 ne pose donc pas de problèmes et son prix de revient est modique ; le graphique G17 montre le signal son obtenu à la sortie du filtre 17, avec, en traits interrompus, la bande passante de ce filtre qui est environ de 10 MHz.

La présente invention n'est pas limitée à l'exemple décrit. C'est ainsi qu'un filtre supplémentaire peut être inséré entre l'amplificateur 15 et le coupleur 16 pour éliminer la fréquence de transposition $F_T$ et le reste de la bande latérale supérieure du signal image, dans le signal représenté par le graphique G15 de la figure 3 ; le filtre 17 sera néanmoins nécessaire pour éliminer les résidus du spectre après soustraction, en particulier le reste de porteuse image. De même le filtre 12, qui effectue une suppression, en fréquences intermédiaires, des fréquences basses du signal modulant constitué par le signal vidéo, peut être supprimé ; le signal de sortie de la ligne à retard 10, qui présente une atténuation d'environ —10 dB par octave, doit alors être simplement corrigé par un circuit de compensation avant d'être appliqué à l'entrée de l'amplificateur 14 et le filtrage des fréquences hautes du signal modulant doit s'effectuer en fréquences transposées, après le convertisseur 13 ou l'amplificateur 15.

Il est également possible de disposer la ligne à retard 10, faite avec le câble coaxial d'environ 60 m, entre le convertisseur 13 et l'amplificateur 15. La ligne à retard, après avoir été ajustée pour donner l'égalité des temps de transit, peut être réajustée à partir de la longueur trouvée pour obtenir la valeur de déphasage nécessaire sur la borne B' du coupleur 16 ; en effet, étant donné les fréquences élevées qui traversent alors la ligne à retard, une faible modification de la longueur du câble modifie fortement la phase et très peu le temps de transit ; le circuit déphaseur réglable 11 peut donc être remplacé par une liaison directe entre le distributeur 9 et le convertisseur 13. Malheureusement ce branchement de la ligne à retard 10 en aval du convertisseur 13 introduit des pertes importantes et nécessite un amplificateur 15 à très grand gain.

Il est par ailleurs à remarquer que le filtre 12 pourrait être remplacé par un simple court-circuit ; si cela n'a pas été fait dans le montage selon la figure 2 c'est pour éviter d'avoir à amplifier, sans distorsion, des signaux à niveau élevé, constitués par les raies à fréquence porteuse image à 703,25 et 781,05 MHz et, donc, pour éviter l'emploi d'un amplificateur plus puissant que l'amplificateur 15 et pour éviter une consommation inutile d'énergie dans cet amplificateur et une augmentation de son prix.

**Revendications**

1. Dispositif séparateur, pour extraire le son du signal de sortie d'un émetteur de télévision, comportant des moyens de prélèvement (6) pour prélever un signal à tester sur la sortie de l'émetteur, caractérisé en ce qu'il comporte un circuit de soustraction (16, 17) pour recevoir sur une première entrée (A'), le signal à tester, et des moyens de conversion (8-14), couplés à une borne (B) délivrant le signal à fréquence intermédiaire image, pour élaborer un signal image seule tel que, appliqué sur une seconde entrée (B') du circuit de soustraction, la soustraction donne un signal correspondant au signal à tester débarrassé d'au moins la partie du spectre image la plus proche du spectre son, et en ce que les moyens de conversion comportent à cet effet : un convertisseur (13) couplé pour recevoir, comme signal de transposition, le signal de transposition haute fréquence ($F_T$) de l'émetteur et, comme signal à transposer, au moins la partie du spectre du signal à fréquence intermédiaire image la plus proche du signal à fréquence intermédiaire son ; et des circuits de réglage (10, 11, 14) pour régler le temps de transit (10) l'amplitude (14) et la phase (11) du signal image seule.

2. Dispositif séparateur selon la revendication 1, caractérisé en ce que le circuit de soustraction comporte un coupleur à 3 dB à 90° (16) et un filtre de sortie (17).

3. Dispositif séparateur selon la revendication 1, caractérisé en ce que le circuit de réglage du temps de transit comporte une ligne à retard réglable (10) pour recevoir, sur sa première extrémité, au moins la partie du spectre du signal à fréquence intermédiaire image la plus proche du signal à fréquence intermédiaire son et en ce que la seconde extrémité de la ligne à retard est couplée au convertisseur pour lui fournir le signal à transposer.

4. Dispositif séparateur selon la revendication 1, caractérisé en ce que le circuit de réglage de l'amplitude comporte un amplificateur à gain ajustable (14) connecté en série dans la liaison entre la borne (B) et la seconde entrée (B') du circuit de soustraction.

5. Dispositif séparateur selon la revendication 1, caractérisé en ce que le circuit de réglage de la phase comporte un circuit déphaseur (11) pour transmettre au convertisseur (13) le signal de transposition haute fréquence de l'émetteur.

**Claims**

1. A separating device for extracting the sound from the output signal of a television transmitter, comprising means (6) for deriving the signal to be tested at the output of the transmitter, characterized in that it comprises a subtraction circuit (16 and 17) to receive the signal to be tested at a first input (A'), and conversion means (8-14), coupled with a terminal (B) delivering the image intermediate frequency signal, for processing a sole image signal so that, applied to a second input (B') of the subtraction circuit, the subtraction yields a signal corresponding to the signal to be tested freed of at least the part of the image spectrum whichis the nearest to the sound spectrum and in that the conversion means comprise for this purpose : a converter (13) coupled in order to receive, as the transposition signal, the RF transposition signal ($F_T$) of the transmitter and, as a signal to be transposed, at least the part of the spectrum of the image intermediate frequency signal which is nearest to the sound intermediate frequency signal ; and regulating circuits (10, 11 and 14) for regulating the time of transit (10), the amplitude (14) and the phase (11) of the sole image signal.

2. The separating device as claimed in claim 1 characterized in that the subtraction circuit comprises a 3 dB 90° coupler (16) and an output filter (17).

3. The separating device as claimed in claim 1 characterized in that the regulating circuit for the transit time comprises a variable delay line (10) for receiving, at its first end, at least the part of the spectrum of the image intermediate frequency signal nearest to the sound intermediate frequency signal and in that the second end of the delay line is coupled with the converter to provide it with the signal to be transposed.

4. The separating device as claimed in claim 1 characterized in that the amplitude regulating circuit comprises a variable gain amplifier (14) connected in series in the connection between the terminal (B) and the second input (B') of the subtraction circuit.

5. The separating device as claimed in claim 1 characterized in that the phase regulating circuit comprises a dephasing circuit (11) to transmit the RF transposition signal of the transmitter to the converter (13).

**Patentansprüche**

1. Trennvorrichtung zur Herauslösung des Tonsignals aus dem Ausgangssignal eines Fernsehsenders, mit Abgreifmitteln (6) zum Abgreifen eines zu überprüfenden Signals am Ausgang des Senders, dadurch gekennzeichnet, daß sie eine Subtrahierschaltung (16, 17) enthält, um an einem ersten Eingang (A') das zu überprüfende Signal zu empfangen, und Umsetzmittel (8-14) enthält, welche an einen Anschluß (B) angekoppelt sind, der ein Bild-Zwischenfrequenzsignal abgibt, um ein solches Nur-Bild-Signal zu erzeugen, daß beim Anliegen dieses Signals an einem zweiten Eingang (B') der Subtrahierschaltung die Subtrak-tion ein Signal ergibt, welches dem zu überprü-fenden, wenigstens von demjenigen Teil des Bildspektrums, der dem Tonspektrum am nächsten liegt, befreiten Signal entspricht, und daß die Umsetzmittel zu diesem Zweck enthalten : einen Umsetzer (13), der so angekoppelt ist, daß er als Umsetzsignal das Hochfrequenz-Umsetzsignal ($F_T$) des Senders und als umzusetzendes Signal wenigstens denjenigen Teil des Spektrums des Bild-Zwischenfrequenzsignals empfängt, der dem Ton-Zwischenfrequenzsignal am nächsten liegt ; und Einstellkreise (10, 11, 14) zum Einstellen der Durchlaufzeit (10), der Amplitude (14) und der Phase (11) des Nur-Bild-Signals.

2. Trennvorrichtung nach Anspruch 1, dadurch gekennzeichnet, daß die Subtrahierschaltung einen 90°-3 dB-Koppler (16) und ein Ausgangsfilter (17) enthält.

3. Trennvorrichtung nach Anspruch 1, dadurch gekennzeichnet, daß der Einstellkreis für die Durchlaufzeit eine einstellbare Verzögerungsleitung (10) enthält, um an ihrem ersten Eingang wenigstens denjenigen Teil des Bild-Zwischenfrequenzsignalspektrums zu empfangen, der am nächsten bei dem Ton-Zwischenfrequenzsignal liegt, und daß das zweite Ende der Verzögerungsleitung an den Umsetzer angekoppelt ist, um ihm das umzusetzende Signal zuzuführen.

4. Trennvorrichtung nach Anspruch 1, dadurch gekennzeichnet, daß der Einstellkreis für die Amplitude einen Verstärker (14) mit einstellbarer Verstärkung enthält, der in Reihenschaltung in die Verbindung zwischen dem Anschluß (B) und dem zweiten Eingang (B') der Subtrahierschaltung geschaltet ist.

5. Trennvorrichtung nach Anspruch 1, dadurch gekennzeichnet, daß der Einstellkreis für die Phase einen Phasenschieberkreis (11) umfaßt, um dem Umsetzer (13) das Hochfrequenz-Umsetzsi-gnal des Senders zuzuführen.

Fig.1

Fig.2

# Fig.3

G 10

G 12

FI    3    FS    FS'    FI'

G 2    703,25 MHz    708,75 MHz    742,15 MHz    775,55 MHz    781,05 MHz

$F_T$

FI    FS

G 6 (A')

$F_T$

G 15 (B')

FI    FS    $F_T$

G 16

FS

G 17